# EUROPEAN PATENT APPLICATION

(11) **EP 1 404 145 A2**
(43) Date of publication of application: **31.03.2004**
(21) Application number: 03021609.7
(22) Date of filing: 25.09.2003
(51) Int. Cl.: H04Q 11/00

(54) **Method and apparatus for associating optical cross-connect channels with non-associated overhead**

(30) Priority: 27.09.2002 US 256784
(71) Applicant: ALCATEL, 75008 Paris (FR)
(72) Inventor: Mazzurco, Anthony, Plano, TX 75093 (US)
(74) Representative: Dreiss, Fuhlendorf, Steimle & Becker

(57) **Abstract**

An optical cross connect (40) includes a database (44) which associates each of its outgoing OSCs (Optical Service Channels) with Section Traces corresponding to the ports serviced by the OSC. Periodically, the optical cross connect (40) transmits the associated Section Traces over each OSC to inform a receiving optical cross connect (40) of the channels in the channel group associated with the OSC. Any changes in configuration of the outgoing channels of an optical cross connect cause the Section Traces to be updated automatically.

## Description

### Background of the Invention

### 1. TECHNICAL FIELD

This invention relates in general to telecommunications and, more particularly, to optical cross-connects.

### 2. DESCRIPTION OF THE RELATED ART

Network Service Providers (NSPs) use DWDMs (Dense Wavelength Division Multiplexers) to gain efficiencies in fiber utilization. A DWDM multiplexes multiple channels onto an optical fiber (or demultiplexes multiple channels from an optical fiber), with each channel being transmitted at a unique frequency.

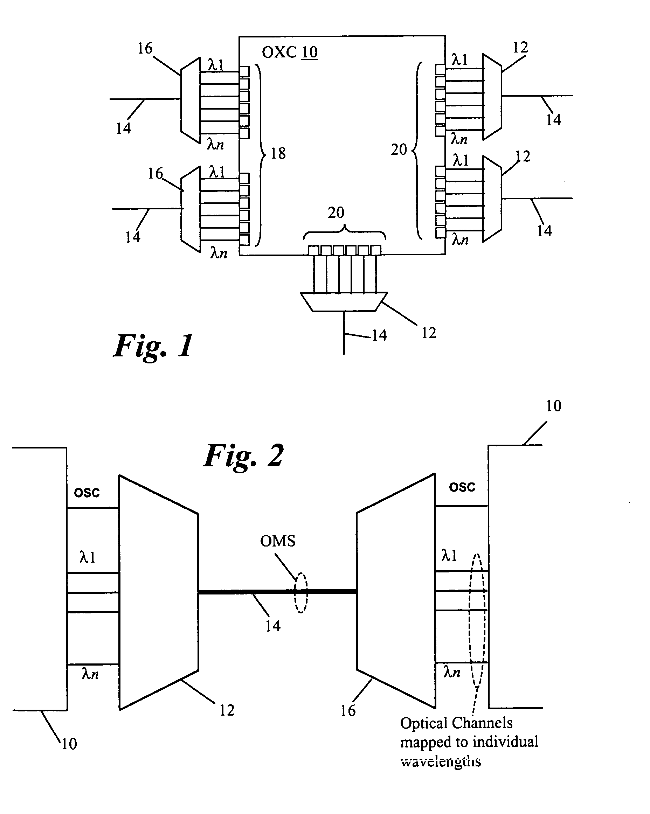

Figure 1 illustrates a general block diagram showing the routing of traffic through an optical cross connect (OXC) 10. For purposes of illustration, DWDMs are shown herein as separate multiplexing functions (DWDMs 12) and demultiplexing functions (DWDMs 16), although in an actual implementation, a single DWDM generally performs both functions. Multiplexing DWDMs 12 multiplex multiple channels from an OXC 10 onto a fiber 14. Channels from an incoming signal on fibers 14 are received by demultiplexing DWDMs 16, which demultiplex the signals from the incoming line into the constituent wavelengths (λ1 - λ*n*). For purposes of illustrations, *n* is an arbitrary number that may be different for each DWDM 12 and 16. Each wavelength corresponds to a channel; incoming communications on the separated channels are received at ports 18 and outgoing communications are output at ports 20. Each channel may be referenced by its wavelength λ*x*.

The OXC 10 is programmed to switch signals at each of its incoming ports 18 to a desired output port 20. The signals at the output ports 20 are coupled to one or more DWDMs 12, each of which multiplex the channels onto a single fiber 14. The layer of the network provided by the DWDM, comprising a fiber 14 carrying multiple wavelengths (each dedicated to a channel), is referred to herein as the Optical Multiplex Section (OMS).

Development is ongoing in optical network standards and optical channel overhead. In ITU (International Telecommunication Union) specification G.709, overhead associated with the channels on a fiber can be either associated (i.e., directly mapped in-band to the channel) or non-associated (i.e., passed over a channel shared by all the channels on the fiber). The common channel is referred to as the OSC (Optical Service Channel). The types of overhead that may be passed over the OSC have not yet been identified, but will likely include information on OMS status, maintenance requests, and network topology information, such as ring maps.

Figure 2 illustrates a block diagram showing DWDM connections between two OXCs 10. As can be seen, the OSC channel is multiplexed onto the fiber 14 along with the traffic channels.

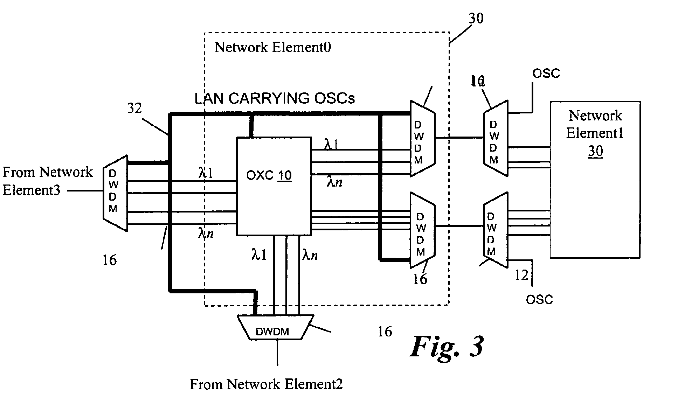

A major problem is illustrated in connection with Figure 3. Figure 3 illustrates an OXC 10 receiving signals from multiple network elements 30. The handling of the individual optical channels for a network element 30 is performed in the network element's OXC 10. An OXC 10 may receive OSC channels from multiple DWDMs 12 and multiple network elements 30. In the illustration of Figure 3, OXC 10 (of Network Element0) receives four OSCs from three Network Elements 30 (Network Element1 uses two DWDMs, and hence two OSCs, to communicate with Network Element0). OSC information is usually brought to a common LAN 32, which transfers the various OSC messages to the OXC 10.

One problem with this approach is that the association between OSC information received by the OXC 10 over the LAN 32 is no longer physically tied to its source; the information may be coming from any one of a number OSCs associated with respective DWDMs 12. It should be noted that mere association of the traffic channels with a network element 30 is insufficient, since multiple OSCs may pass between a pair of network elements 30 (as shown between "Network Element0" and "Network Element1"). The prevailing approach has been to create an association by provisioning via user commands. For example, each OSC has a node on the LAN that can be uniquely identified, for example, with an IP address. When a DWDM 12 is connected to a OXC 10, a database associated with the OXC is manually updated to indicate which port on the OXC corresponds to each IP address and channel designation.

Unfortunately, the approach is fraught with potential errors. For example, if port assignments are switched between traffic channels, a human error in re-provisioning the OXC, or a failure to re-provision the OXC, can cause OSC information to be mismatched with the intended channel. Further, excessive re-provisioning wastes human resources.

Therefore, a need has arisen for an association mechanism between non-associated control information and OXC ports that avoids unnecessary manual provisioning.

### Brief Summary of the Invention

In the present invention, a network element in a communication network comprises a cross connect having multiple ports for transmitting data, each port having an associated section trace, circuitry for associating an outgoing optical service channel with a set of section traces corresponding to output ports associated with the optical service channel, and circuitry for periodically transmitting the associated section traces over the outgoing optical service channel.

The present invention provides advantages over the prior art. Providing an association between an OSC and the Section Traces assigned to the channels covered by the OSC eliminates some of the manual provisioning that would be required by explicit operation intervention for a provisioned OSC. Provisioning is entirely eliminated at the destination side of the OCS and optical channels. The association provides a way to continually verify the association to either alert the operation whenever there is an unexpected change or to automatically redefine the association.

### Brief Description of the Several Views of the Drawings

For a more complete understanding of the present invention, and the advantages thereof, reference is now made to the following descriptions taken in conjunction with the accompanying drawings, in which:
Figure 1 illustrates a general block diagram showing the routing of traffic through an optical cross connect (OXC);
Figure 2 illustrates a block diagram showing DWDM connections between two OXCs;
Figure 3 illustrates an OXC receiving OSCs from four DWDMs associated with three different network elements;
Figures 4a and 4b illustrate normal use of a Section Trace to verify proper connections between ports;
Figure 5 illustrates a block diagram of an OXC that uses the Section Trace in order to provide accurate communication of non-associated messages over the OSC;
Figures 6a and 6b illustrate two database embodiments that could be used to associate Section Traces with OSCs; and
Figure 7 illustrates periodic transmission of the Section Traces assigned to an OSC.

### Detailed Description of the Invention

The present invention is best understood in relation to Figures 1 - 7 of the drawings, like numerals being used for like elements of the various drawings.

The present invention uses a Section Trace for automatic correlation of OCS information and its associated port on a OXC 10. The concept of a Section Trace is rooted not only in optical networks, but in legacy SONET and SDH networks as well. A Section Trace is used to verify correct facility connectivity between adjacent, Section or Regenerator Section overhead terminating, network elements. In essence, each connection between OXC ports of respective network elements has a unique Section Trace assignment. The Section Trace, which is embedded in the data frame, is periodically transmitted from a sending port to a receiving port of adjacent OXCs; if the Section Trace does not match the expected Section Trace, an error occurs, and is immediately reported, and the connection is taken down.

With regard to ITU standard G.709, Optical Transport Architectrue specification, the Section Trace must be (among other factors): (1) globally unique in its layer network and (2) invariant while the access point remains in existence. The main requirement is that the Section Trace be unique. As stated in G.709, "the unique access point code shall be a matter for the organization to which the country code and ITU carrier code have been assigned, provided that uniqueness is guaranteed."

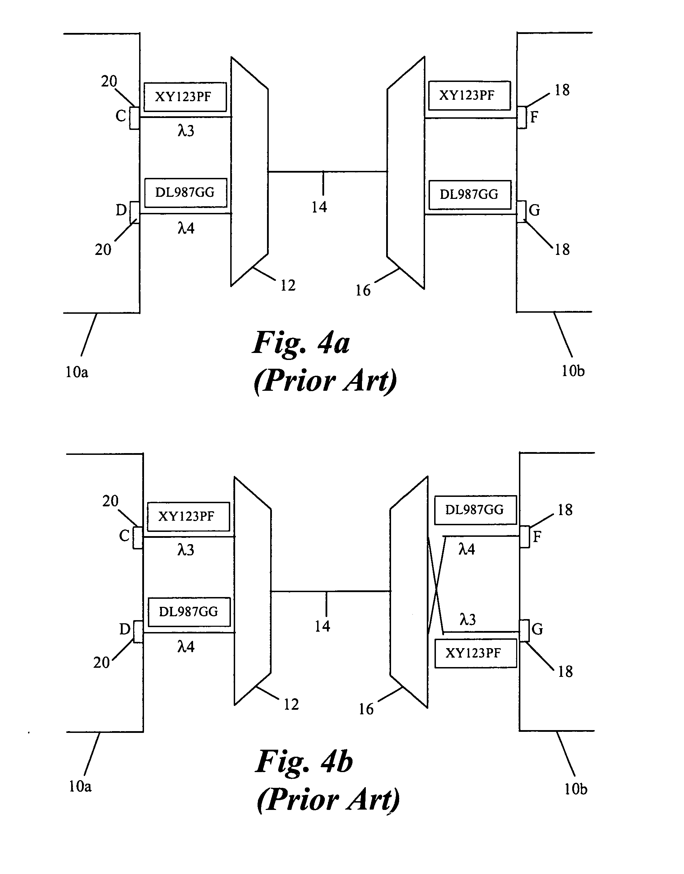

A normal use of the Section Trace is shown in connection with Figures 4a and 4b. In this example, a sending OXC 10a has ports C and D coupled to a DWDM 12. The channels corresponding to ports C and D on OXC 10a terminate on ports F and G of OXC 10b. These channels will be referred to as channel λ3 (from port C to port F) and channel λ4 (from port D to port G). Channels λ3 and λ4 are multiplexed onto fiber 14 using DWDM 12 of OXC 10a and demultiplexed by using DWDM 16 of OXC 10b (it should be noted that the Section Trace is also used in links between network elements 30 in other configurations where dense wavelength multiplexing is not used).

During operation, the sending OXC 10a periodically outputs the Section Trace for each channel, normally a 16-byte message with one byte transmitted per frame. As shown in the example of Figure 4a, a Section Trace of "XY123PF" is sent of channel λ3 and a Section Trace of "DL987GG" is sent over channel λ3. As each Section Trace is received by a port of the receiving OXC 10b, it is compared to the Section Trace provisioned for that port. If the Section Trace is different than the provisioned Section Trace, an alarm sounds and communication over the channel is terminated. Thus, if a Section Trace other than "XY123PF" is received on port F of OXC 10b, an error situation occurs. Similarly, if a Section Trace other than "DL987GG" is received on port G of OXC 10b, an error situation occurs.

If, as shown in the example of Figure 4b, an inadvertent disconnection occurred on ports F and G of OXC 10b, and channel λ3 was coupled to port G and channel λ4 was coupled to port F, then port F would begin to receive Section Traces of "DL987GG" and port G would begin to receive Section Traces of "XY123PF". In this case, alarms would be generated for both channels and communication over both channels would cease.

Accordingly, the Section Trace ensures that proper port-to-port connections between adjacent OXCs are maintained at all times. If there are changes in the connections, it is mandatory that the Section Trace information be updated on both network elements.

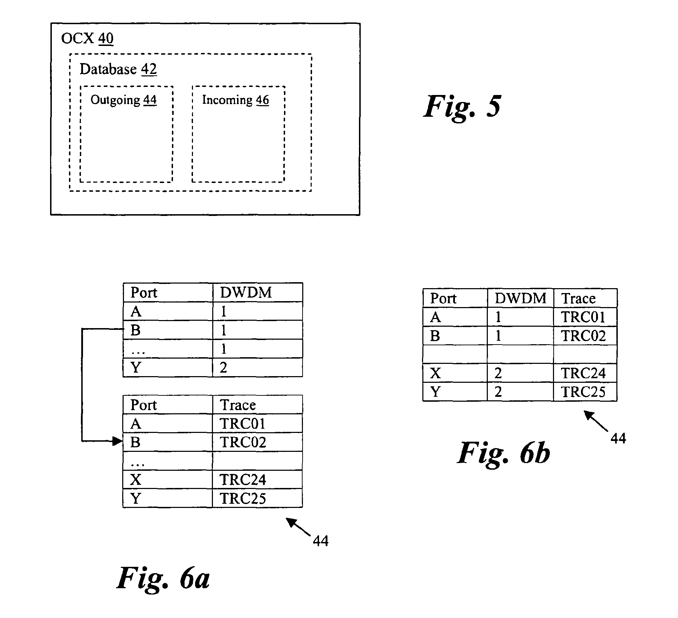

Figure 5 illustrates a block diagram of an OXC 40, which can be used in a network element 30, that uses the Section Trace in order to provide accurate association of non-associated messages, such as common restoration status, over the OSC. The OXC 40 includes database circuitry 42 that associates one or more OSCs transmitted from the OXC 40 with the Section Traces associated with each OSC.

In operation, Section Trace information is used to correlate messages on the OSC with their intended channels. Whenever there is an intentional change of channel connections at either a receiving or sending OXC 40, the Section Trace will be re-provisioned in accordance with normal, and mandatory, procedures described above. Failure to re-provision the Section Trace for the affected ports would cause an alarm, using already existing procedures. Thus, whenever a Section Trace is re-provisioned, the database 42 is automatically updated. By using the Section Traces to correlate non-associated messages with their intended ports, provisioning the Section Traces to ensure proper connections between OXCs 40 automatically updates the correlations between ports and non-associated messages.

Figures 6a and 6b illustrate two embodiments that could be used for the database 42. In Figure 6a, the database 42 includes a first table 44 that associates port and DWDM assignments and a second table 46 that associates port and Section Trace assignments. The first table 44 and second table 46 could be the same or similar to the information structure of the type already used to store the Section Trace associated with each port. In the present invention, the first table 44 and second table 46 are related by port designation, such that a query can determine the DWDM and the Section Trace assigned to a given port.

In Figure 6b, a single table 48 relates each port to a DWDM and a Section Trace. Thus, table 48 has a record corresponding to each port. Each record has fields identifying a DWDM and a Section Trace.

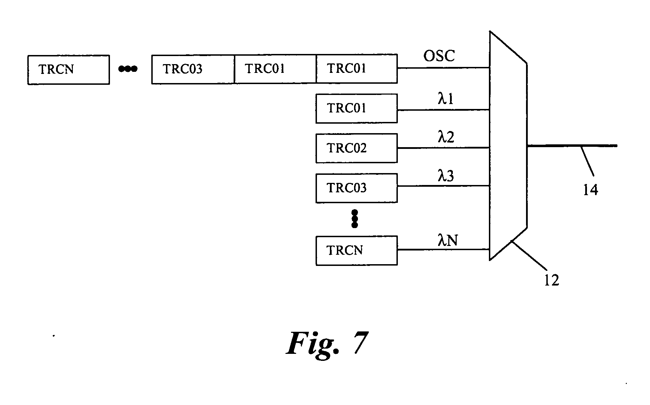

As shown in Figure 7, each OSC periodically transmits the Section Traces assigned to each of its associated ports 20. An OXC 40 receiving a list of Section Traces from one or more OSCs, identifies each OSC by its MAC (Media Access Control) address on the LAN 32, or other identifier, and builds a table 46 (see Figure 5) associating each OSC with its channels. The OXC 40 therefore knows the channel groups associated with any messages sent over the OSC. The incoming table 40 can be initially set up either by using the provisioned expected Section Traces or by using the actual received Section Traces. In either case, the continually received Section Traces serve as a method of continually verifying the presumed association. If a trace unexpectedly changes, the receiving OXC 40 can either alert the user and wait to be reprovisioned (which is already required in present deployments) or update the incoming table 46 with the new channel's location.

The above assumes the most general case, where there is no forced association between an OSC and its channels. The general case would occur where there is external equipment, i.e., DWDMs, forming the OMS. For an OXC 40 with equipment partitioned such that the DWDM function is contained within an equipment shelf, the administrative processor controlling the OSC would know which channels share the same OSC without reference to a database as shown in Figures 6a-b.

The transmission of the Section Traces under normal operating conditions by each OSC can occur infrequently (once per second, or longer). An update is necessary only when there is a change which affects the Section Traces, such as an addition or deletion of a channel, or a change in the channel's section trace. The databases at both the sending and receiving OXC 40 are automatically updated by the mandatory provisioning of the Section Traces already required when a change is made.

The present invention provides advantages over the prior art. Providing an association between an OSC and the Section Traces assigned to the channels covered by the OSC eliminates the additional manual provisioning that would be required by explicit operation intervention for a provisioned OSC. The only provisioning which must be performed is the setting of Section Traces and assigning the channels to DWDMs; however, this is provisioning that is required independent of the association between Section Traces and OSCs - thus this association is provided without any additional effort. Provisioning is entirely eliminated at the destination side of the OCS and optical channels. The association provides a way to continually verify the association to either alert the operation whenever there is an unexpected change or to automatically redefine the association. It allows the non-associated overhead to be mapped to the appropriate channels.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A network element in a communication network comprising:
a cross connect having multiple ports for transmitting data, each port having an associated section trace;
circuitry for associating one or more outgoing optical service channels with a respective set of section traces corresponding to output ports associated with the optical service channel; and
circuitry for periodically transmitting the associated section traces over each outgoing optical service channel.

2. The network element of claim 1 wherein said circuitry for associating the optical service channel with a set of section traces comprises an electronic database.

3. The network element of claim 1 and further comprising circuitry for associating one or more incoming optical service channels with a respective set of section traces corresponding to input ports.

4. The network element of claim 3 wherein said circuitry for associating one or more incoming optical service channels with a respective set of section traces includes circuitry for storing a set of section traces from an incoming optical service channel in a database.

5. The network element of claim 3 wherein each incoming optical service channel is associated with a local area network address.

6. The network element of claim 1 wherein each outgoing optical service channel is associated with a respective dense wavelength division multiplexer.

7. A method of associating messages over an optical service channel with a set of ports, comprising the steps of:
associating each port of a network element with a section trace;
associating one or more outgoing optical service channels with a respective set of section traces corresponding to output ports associated with the optical service channel; and
periodically transmitting the associated section traces over each outgoing optical service channel.

8. The method of claim 13 wherein said step associating the optical service channel with a set of section traces comprises associating the optical service channel with a set of section traces in an electronic database.

9. The method of claim 13 and further comprising the step of associating one or more incoming optical service channels with a respective set of section traces corresponding to input ports.

10. The method of claim 15 wherein said step associating the optical service channel with a set of section traces comprises associating the incoming optical service channel with a set of section traces in an electronic database.
